# EUROPEAN PATENT APPLICATION

(11) **EP 4 799 872 A1**
(43) Date of publication of application: **02.09.2026**
(21) Application number: 24882211.6
(22) Date of filing: 10.10.2024
(51) Int. Cl.: B60R 21/205, B60R 21/231

(54) **AIRBAG DEVICE FOR VEHICLE**

(30) Priority: 27.10.2023 JP 2023185030
(71) Applicant: AUTOLIV DEVELOPMENT AB, 44783 Vargarda (JP)
(72) Inventor: OKUGAWA, Shota, Yokohama-shi, Kanagawa 222-8580 (JP); ANABUKI, Takuma, Yokohama-shi, Kanagawa 222-8580 (JP)
(74) Representative: Feucker, Max Martin
(86) International application number: PCT/JP2024/036286
(87) International publication number: WO 2025/089098

(57) **Abstract**

Abstract: PROBLEM

To provide a vehicle airbag device that achieves both an improvement in occupant restraining force and a reduction in burden on a windshield.

RESOLUTION MEANS

The airbag cushion 108 includes an inflator connection part 118, a main expansion part 120 formed in a vehicle-rearward location from the inflator connection part 118, a front contact part 122 that expands from the inflator connection part 118 along an upper surface 102a of an instrument panel 102, a cushion upper surface part 126 formed in a state separated from the windshield 114, a front protection part 128 of the main expansion part 120 that restrains the occupant 112 from a vehicle-forward location, and a pair of rearward protruding parts 130 and 132 that protrude from both sides of the front protection part 128 in the vehicle width direction toward the rear of the vehicle. The airbag cushion 108 maintains a self-supporting orientation when the front contact part 122 contacts an upper surface 102a of the instrument panel 102 and the main expansion part 120 contacts a rear surface 102b of the instrument panel 102.

## Description

### TECHNICAL FIELD

The present invention relates to a vehicle airbag device that includes an airbag cushion that expands and deploys between the instrument panel of a vehicle and an occupant seated in the front row.

### BACKGROUND ART

Airbag devices have generally become standard equipment in current vehicles. An airbag device is a safety device which is operated in the event of an emergency such as a vehicle collision, retaining and protecting occupants utilizing an airbag cushion which expands and deploys by the force of gas. There are various types of airbag devices depending on the installation site and application. For example, in a driver's seat, a front airbag is provided in the center of a steering wheel. In addition, in a front passenger seat, a passenger airbag is provided on an instrument panel or a peripheral area thereof.

The airbag cushions in various airbag devices are designed with consideration for the installation location and other factors to ensure that the airbag cushion can fully restrain the occupant. For example, an airbag 2 described in FIG. 1 of Patent Document 1 is for the passenger seat, and a contact part 2a that contacts an upper surface of an instrument panel 3 that is formed to be wide so as to be self-supporting on the instrument panel 3.

### RELATED ART DOCUMENTS

### PATENT DOCUMENTS

Patent Document 1: JP 2015-21726 A

### SUMMARY OF THE INVENTION

### PROBLEM TO BE SOLVED BY THE INVENTION

In recent years, vehicle safety performance evaluations have required that excessive burden not be placed on the windshield. In Patent Document 1, paragraph 0006 states that the airbag 2 is shaped so as not to come into contact with the windshield 5. However, the technology described in Patent Document 1 only applies to the contact part 2a in front of an inflator 4, leaving room for improvement in stabilizing the orientation of the airbag cushion and achieving non-contact with the windshield.

In light of these problems, an object of the present invention is to provide a vehicle airbag device that achieves both improved occupant restraint and reduced burden on the windshield.

### MEANS FOR SOLVING THE PROBLEM

In order to resolve the problems described above, a typical configuration of a vehicle airbag device according to the present invention includes:
an airbag cushion that expands and deploys between an instrument panel of a vehicle and an occupant seated in a regular orientation in a front-row seat; and
an inflator secured to an inner side of an upper surface of the instrument panel that supplies gas to the airbag cushion, wherein
the airbag cushion includes:
   an inflator connection part into which a part of the inflator is inserted;
   a main expansion part formed vehicle-rearward of the inflator connection part and expanding to a position lower than the upper surface of the instrument panel;
   a front contact part that expands from the inflator connection part protruding in a wedge shape in a forward direction of the vehicle along the upper surface of the instrument panel;
   a cushion upper surface part formed from the front contact part over an upper side of the main expansion part;
   a front protection part formed in a region of the main expansion part facing the occupant that restrains the occupant from a front side of the vehicle; and
   a pair of rearward protruding parts provided on both sides of the front protection part in the vehicle width direction and expanding in a state of protruding vehicle-rearward,
   the airbag cushion being capable of retaining a self-supporting orientation based on the front contact part contacting the upper surface of the instrument panel and the main expansion part contacting a vertically extending portion of a rear surface of the instrument panel.

The airbag cushion described above is capable of retaining a self-supporting orientation by the front contact part contacting the upper surface of the instrument panel and the main expansion part contacting the rear surface of the instrument panel. With this configuration, the airbag cushion can stabilize orientation and effectively restrain the occupant without coming into contact with the windshield. Therefore, the configuration described above enables achieving both a reduction in the burden on the windshield and an improvement in occupant restraint.

The main expansion part described above has a lower expansion part that expands and deploys below a virtual line extending along the upper surface of the instrument panel, and the lower expansion part may have a rear contact part formed at a lower part of the lower expansion part that bulges forward from an upper part of the lower expansion part and comes into contact with the rear surface of the instrument panel.

According to the configuration described above, the main expansion part is more likely to come into contact with the rear surface of the instrument panel by means of the rear contact part formed on the lower expansion part. Therefore, with the configuration described above, the rear surface of the instrument panel can be used as a reaction surface to further stabilize the orientation of the airbag cushion.

The airbag cushion described above may further include a diffuser provided inside the airbag cushion around the inflator connection part and covering a part of the inflator, and
the diffuser includes:
a front opening part that guides gas supplied from the inflator to a front bulging part on a vehicle-front side; and
a rear opening part that guides gas supplied from the inflator to the main expansion part on a vehicle-rear side.

With the configuration described above, by sending gas to the front contact part and the main expansion part via the diffuser, the front contact part and the main expansion part can be rapidly expanded and deployed and brought into contact with the instrument panel, thereby enabling the orientation of the airbag cushion to be further stabilized.

The airbag cushion described above may include:
a main panel that forms the cushion upper surface part, the front protection part, and a lower surface of the airbag cushion extending from the main expansion part to the front contact part, and in which the inflator connection part is provided;
a pair of side panels forming vehicle-width-direction outer sides of the main expansion part, the front contact part, and the rearward protruding parts, respectively; and
a pair of inner lobe panels forming vehicle-width direction inner sides of the rearward protruding parts,
of the side panels, where an outer lobe panel portion forming the vehicle-width direction outer side of the rearward protruding part has a larger surface area than the inner lobe panel in a state spread out and placed flat, and
the outer lobe panel portion is formed into a three-dimensional shape by being joined in a state in which a prescribed notch part cut inward toward a center is closed.

According to the configuration described above, an airbag cushion having a pair of rearward protruding parts can be suitably achieved. In particular, the three-dimensional shape of the outer lobe panel portion allows for a larger capacity in the pair of rearward protruding parts. In addition, the surface area of the inner lobe panel is smaller than that of the outer lobe panel portion, causing the tension on the inner lobe panel to be greater than that on the outer lobe panel portion. As a result, the pair of rearward protruding parts expand and tilt inward as they are pulled by the inner lobe panel, thereby increasing the restraining force on occupants who enter between the pair of rearward protruding parts.

The cushion upper surface part described above may be formed by expanding and deploying the upper surface of the airbag cushion in a state separated from the windshield of the vehicle.

With the configuration described above, the cushion upper surface part is separated from the windshield, which reduces the burden on the windshield.

### EFFECT OF THE INVENTION

According to the present invention, a vehicle airbag device that achieves both improved occupant restraint and reduced burden on the windshield can be provided.

### BRIEF DESCRIPTION OF THE DRAWINGS

FIG. 1 is a view depicting the outline of a vehicle airbag device according to an embodiment of the present invention;
FIG. 2 is a schematic cross-sectional view along A-A of an airbag cushion of FIG. 1(b);
FIG. 3 is a view depicting only the airbag cushion of FIG. 1(b) during expansion and deployment;
FIG. 4 is a view depicting each panel member forming the airbag cushion in FIG. 3;
FIG. 5 is a view depicting the process of forming the rearward protruding part from the side panel in FIG. 4(b);
FIG. 6 is a view depicting the process of the airbag cushion of FIG. 3(b) restraining an occupant;
FIG. 7 is a view depicting how the airbag cushion in FIG. 2 restrains an occupant; and
FIG. 8 is a view depicting a modified example of the side panel in FIG. 5.

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

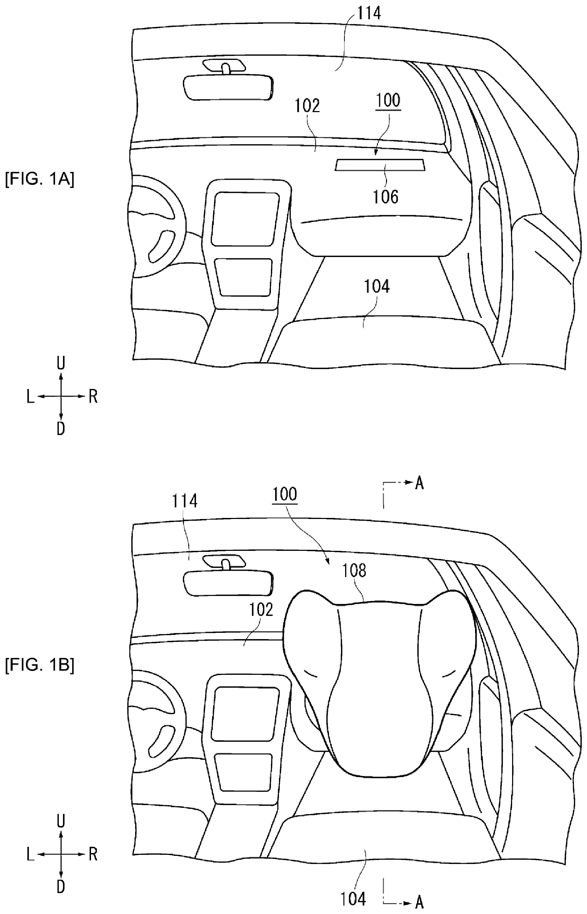

FIG. 1 is a view depicting the outline of a vehicle airbag device 100 according to an embodiment of the present invention. FIG. 1(a) is a view depicting the vehicle airbag device 100 before activation. In the present embodiment, the vehicle airbag device 100 is installed in front of a front row right seat 104 as a passenger airbag for the passenger seat in a vehicle with the steering wheel on the left side.

Hereafter, regarding FIG. 1(a) and other drawings, the front-back direction of a vehicle is depicted by the symbols F (Forward) and B (Back), the left and right sides of the vehicle by the symbols L (Left) and R (Right), and the top and bottom of the vehicle by the symbols U (Up) and D (Down). In particular, "upward" refers to a direction towards the head part as viewed from an occupant in a normal orientation on a seat, and "downward" refers to a direction towards the lower limbs as viewed from the occupant.

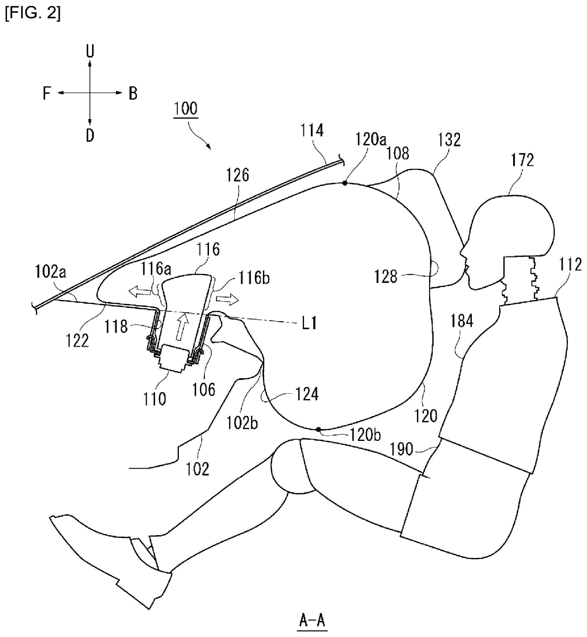

An airbag cushion 108 of the vehicle airbag device 100 (see FIG. 1(b)) is stowed in a stowing part 106 provided in the instrument panel 102. The stowing part 106 is installed in front of the seat 104 of the vehicle, and the stowing part 106 houses the airbag cushion 108 as well as an inflator 110 (see FIG. 2), which is a gas generating device.

FIG. 1(b) is a view depicting an example of the vehicle airbag device 100 depicted in FIG. 1(a) after activation. When a collision is predicted or detected, the airbag cushion 108 expands and deploys from the stowing part 106 (see FIG. 1(a)) toward the front of the seat 104. The airbag cushion 108 is bag-shaped and is formed by overlapping and sewing or bonding a plurality of panels that make up the surface thereof.

FIG. 2 is a schematic cross-sectional view along A-A of the airbag cushion 108 of FIG. 1(b). FIG. 2 also depicts an example of an occupant 112 seated in a normal orientation in the seat 104.

The occupant 112 in FIG. 2 is an example of a dummy used in automobile crash testing. Dummies that can be used for the occupant 112 include, for example, Hybrid III AM50 and AF05 dummies and the like for frontal crash tests.

The AM50 is a dummy modeled after a male with a height of 175 cm and a weight of 78 kg, and whose physical build corresponds to the 50th percentile of American adult male. The AF05 is a dummy that is modeled after a small female with a height of 145 cm, a seated height of 79 cm, and a weight of approximately 45 kg. These dummies are based on US National Highway Traffic Safety Association (NHTSA) standards.

The airbag cushion 108 expands and deploys between the instrument panel 102 and the occupant 112, who is seated in a normal orientation in the seat 104 (see FIG. 1(b)). In particular, the airbag cushion 108 of the present embodiment is self-supporting in contact with an upper surface 102a and a rear surface 102b of the instrument panel 102, and expands and deploys between the upper surface 102a and a windshield 114, and between the rear surface 102b and the occupant 112 of the seat 104, thereby restraining the occupant 112 from the front of the vehicle.

The airbag cushion 108 is connected to an inflator 110, which is a gas generating device, by an inflator connection part 118. The inflator 110 is secured to the inside of the upper surface 102a of the instrument panel 102 using a stud bolt (not depicted), and the portion having the gas ejection hole is inserted into the airbag cushion 108 through the inflator connection part 118.

The inflator 110 activates in response to an impact detection signal sent from a prescribed sensor and supplies gas to the inside of the airbag cushion 108. The airbag cushion 108 begins to expand due to the gas from the inflator 110, and the resulting expansion pressure causes the cover of the stowing part 106 to tear open or the like, and the airbag cushion expands and deploys towards the seat 104 (see FIG. 1(b)).

The inflator 110 in the present embodiment is a disk type. Examples of currently prevailing inflators include: types which are filled with a gas-generating agent and burn the agent to generate gas; types which are filled with compressed gas and supply gas without generating heat; and hybrid types which utilize both combustion gas and compressed gas. Any of these types can be used for the inflator 110.

A diffuser 116 is a member that streamlines the gas supplied from the inflator 110. The diffuser 116 is arranged around the inflator connection part 118 inside the airbag cushion 108, and is designed to cover the inflator 110 inserted into the airbag cushion 108.

The diffuser 116 has a front opening part 116a and a rear opening part 116b as openings for gas to flow through. The diffuser 116 guides the gas in the front-back direction through these opening parts, enabling efficient filling of the airbag cushion 108 with gas.

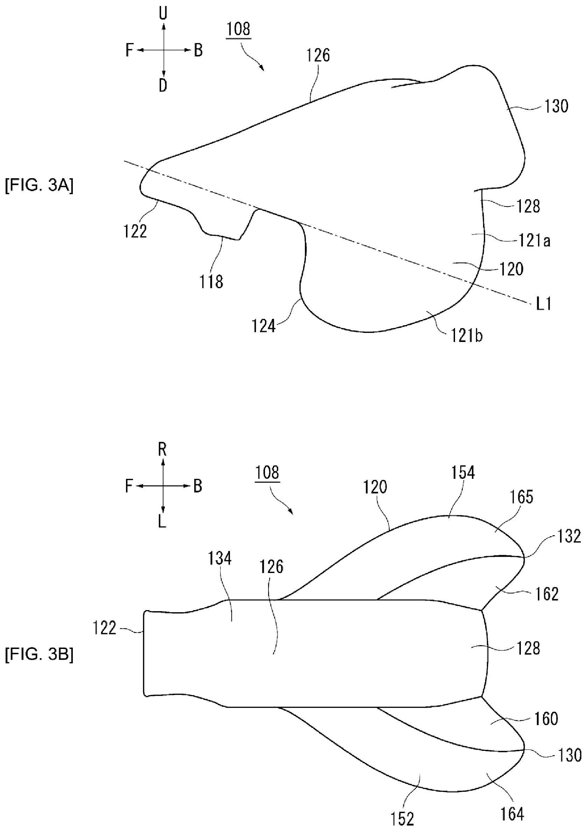

FIG. 3 is a view depicting only the airbag cushion 108 of FIG. 1(b) during expansion and deployment. FIG. 3(a) is a view depicting the airbag cushion 108 of FIG. 1(b) as viewed from the left side in the vehicle width direction.

The airbag cushion 108 is provided with an inflator connection part 118, which is the part into which a part of the inflator 110 (see FIG. 2) is inserted. The inflator connection part 118 is provided in the airbag cushion 108 at a location that overlaps with the instrument panel 102 from above, and at a location slightly forward of the center of the airbag cushion 108 in the present embodiment.

The airbag cushion 108 is provided with a main expansion part 120 as a primary expansion part. The main expansion part 120 is a portion having a large dimension in the up-down direction and formed in the vehicle rearward direction of the inflator connection part 118, and broadly restrains the occupant 112 (see FIG. 2).

As depicted in FIG. 2, the main expansion part 120 expands such that an upper end 120a thereof is positioned near the windshield 114 and a lower end 120b thereof is positioned below a virtual line L1 extending rearward from the upper surface 102a of the instrument panel 102. As a result, the main expansion part 120 can widely restrain the upper body of the occupant 112, mainly from a head part 172 to a chest part 184.

The airbag cushion 108 is provided with a front contact part 122 as an inflatable portion for maintaining a self-supporting orientation. The front contact part 122 expands from the inflator connection part 118 along the upper surface 102a of the instrument panel 102, protruding in a wedge shape towards the front of the vehicle. The front contact part 122 fits into the space between the instrument panel 102 and the windshield 114 and makes surface contact with the upper surface 102a of the instrument panel 102, thereby supporting the airbag cushion 108 in a self-supporting orientation.

The main expansion part 120 is also provided with a rear contact part 124, which supports the airbag cushion 108 in a self-supporting orientation. As depicted in FIG. 3, the main expansion part 120 includes an upper expansion part 121a that expands and deploys above the virtual line L1 extending along the upper surface 102a of the instrument panel 102 (see FIG. 2), and a lower expansion part 121b that expands and deploys below the virtual line L1. The rear contact part 124 is formed in the lower expansion part 121b of the main expansion part 120.

The rear contact part 124 is formed at a lower part of the lower expansion part 121b, and is formed so as to bulge forward relative to an upper part of the lower expansion part 121b on the virtual line L1 side. In particular, the rear contact part 124 is provided to bulge forward toward the rear surface 102b of the instrument panel 102 (see FIG. 2). The main expansion part 120 is caused to more likely come into contact with the rear surface 102b of the instrument panel 102 due to the bulging shape of the rear contact part 124.

As described above, the airbag cushion 108 has a front contact part 122 that contacts the upper surface 102a of the instrument panel 102, and a main expansion part 120 that is in contact with the portion of the rear surface 102b of the instrument panel 102 that extends in the vertical direction via a rear contact part 124, thereby enabling the use of these upper surface 102a and rear surface 102b as reaction force surfaces when restraining an occupant.

The diffuser 116 in FIG. 2 also helps maintain the self-supporting orientation of the airbag cushion 108. More specifically, the diffuser 116 has a front opening part 116a that opens toward the front contact part 122 at the front of the vehicle, and a rear opening part 116b that opens toward the main expansion part 120 at the rear of the vehicle. In other words, the diffuser 116 quickly guides the gas supplied from the inflator 110 to the front contact part 122 and the main expansion part 120. Therefore, the airbag cushion 108 is able to expand and deploy the front contact part 122 and main expansion part 120 early, enabling the airbag cushion to become self-supporting early.

In the present embodiment, the airbag cushion 108 is able to be self-supporting using the upper surface 102a and rear surface 102b of the instrument panel 102, so there is no need to use the windshield 114 to maintain orientation. Therefore, the cushion upper surface part 126 is formed in a state of being separated from the windshield 114.

The cushion upper surface part 126 is the upper surface portion of the airbag cushion 108, extending from the front contact part 122 to the main expansion part 120. The airbag cushion 108 is formed by expanding and deploying the cushion upper surface part 126 in a state separated from the windshield 114, thereby reducing the load that could be placed on the windshield 114. In addition, by limiting the capacity of the airbag cushion 108 to a level that does not come into contact with the windshield 114, the amount of panel material used to form the airbag cushion 108 can be reduced and a low-power inflator can be used, thereby suppressing the manufacturing cost of the airbag cushion 108.

FIG. 3(b) is a view depicting the airbag cushion 108 in FIG. 3(a), as viewed from above. The main expansion part 120 is provided with a front protection part 128 that restrains the occupant 112 (see FIG. 2) from the front, and a pair of rearward protruding parts 130 and 132 that restrain the head part from the sides.

The front protection part 128 is a region formed to extend in the up-down direction in a region of the main expansion part 120 that faces the occupant 112 (see FIG. 2) located on the vehicle-rearward side thereof. The front protection part 128 restrains the occupant 112 from the head part 172 to the chest part 184 and abdomen 190 from the front of the vehicle.

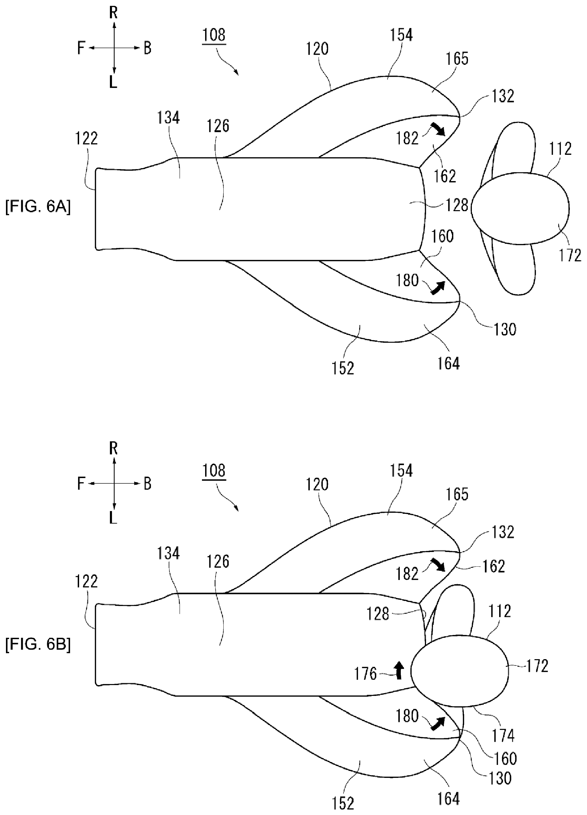

The pair of rearward protruding parts 130 and 132 are parts that expand outwards from an upper part of the main expansion part 120, protruding toward the rear of the vehicle. The rearward protruding parts 130 and 132 are provided on both sides of the front protection part 128 in the vehicle width direction and primarily restrain the side head part 174 of the occupant 112 (see FIG. 6(b)).

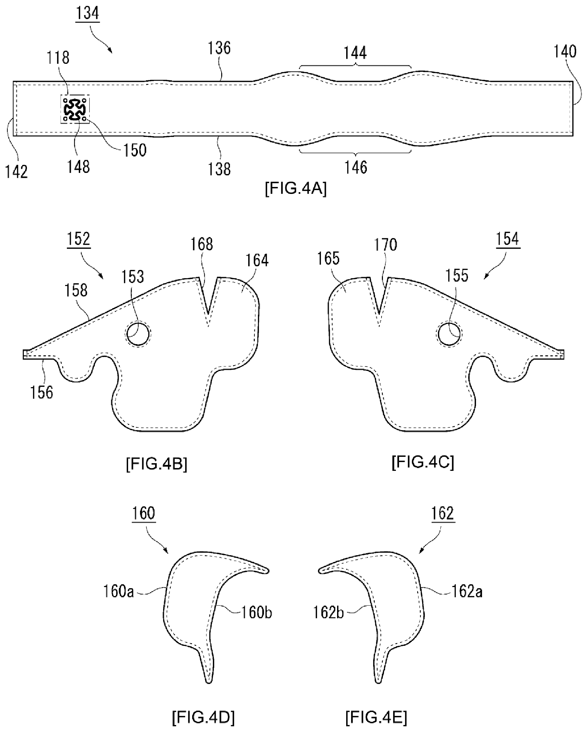

FIG. 4 is a view depicting each panel member forming the airbag cushion 108 in FIG. 3.

FIG. 4(a) is an example depicting the main panel 134 of the airbag cushion 108 from FIG. 3(b) spread out and placed flat. On the airbag cushion 108, a main panel 134 is a panel member that forms the cushion upper surface part 126, the front protection part 128, and the lower surface of the airbag cushion 108 extending from the main expansion part 120 to the front contact part 122.

The main panel 134 is a long, strip-shaped piece, with side edges 136 and 138 that are attached to the edges of side panels 152 and 154 depicted in FIG. 4(b) and FIG. 4(c) by sewing or other means. End parts 140 and 142 of the main panel 134 are joined to each other by sewing or other means.

Curved parts 144 and 146 are provided on a part of the side edges 136 and 138 of the main panel 134. Inner lobe panels 160 and 162 (see FIG. 4(d) and FIG. 4(e)) are joined to the curved parts 144 and 146, forming the inside of the rearward protruding parts 130 and 132 (see FIG. 3(b)).

The main panel 134 is provided with an inflator connection part 118 into which the inflator 110 (see FIG. 2) is inserted. The inflator connection part 118 is formed in the main panel 134 at a location that overlaps the upper surface 102a of the instrument panel 102 from above.

The inflator connection part 118 includes an opening 148 into which the portion of the inflator 110 (see FIG. 2) having a gas outlet is inserted, and a bolt hole 150 into which the stud bolt extending from a retainer ring (not depicted) to which the inflator 110 is attached is inserted. The airbag cushion 108 is secured inside the stowing part 106 by connecting the inflator connection part 118 to the inflator 110.

FIG. 4(b) is a view of an example depicting a left-side panel 152 in the vehicle width direction of FIG. 3(b) spread out and placed flat. The side panel 152 is a panel member that forms the side part of the airbag cushion 108 in the vehicle width direction. The side panel 152, together with the right-side panel in the vehicle width direction (see FIG. 4(c)), has a shape that is symmetrical between the left and right sides of the airbag cushion 108 (see FIG. 3(b)) in the vehicle width direction.

The side panel 152 forms the outer side in the vehicle width direction, extending over the main expansion part 120, the front contact part 122, and the rearward protruding part 130 as depicted in FIG. 3(a). The side panel 152 is also provided with a vent hole 153 for discharging gas.

The side panel 152 is sized such that an upper edge 158 does not come into contact with the windshield 114, while a lower edge 156 forming the lower surface of the front contact part 122 is in contact with the upper surface 102a of the instrument panel 102, so that the cushion upper surface part 126 (see FIG. 2) does not come into contact with the windshield 114.

FIG. 4(c) is a view of an example depicting a rightside panel 154 in the vehicle width direction of FIG. 3(b) spread out and placed flat. The side panel 154 has a shape symmetrical to the side panel 152 in FIG. 4(b), and has the same configuration as the side panel 152.

FIG. 4(d) is a view of an example depicting the inner lobe panel 160 on the left side in the vehicle width direction of FIG. 3(b) spread out and placed flat. The inner lobe panel 160 is a panel member that forms the inner side of the rearward protruding part 130 in the vehicle width direction. The inner lobe panel 160 has a shape that is close to a crescent moon, with the outer peripheral part 160a thereof joined to the side panel 152 and the inner peripheral part 160b joined to the main panel 134.

FIG. 4(d) is a view of an example depicting the inner lobe panel 162 on the right side in the vehicle width direction of FIG. 3(b) spread out and placed flat. The inner lobe panel 162 has a shape symmetrical to the inner lobe panel 160 in FIG. 4(d), and has the same configuration as the inner lobe panel 162.

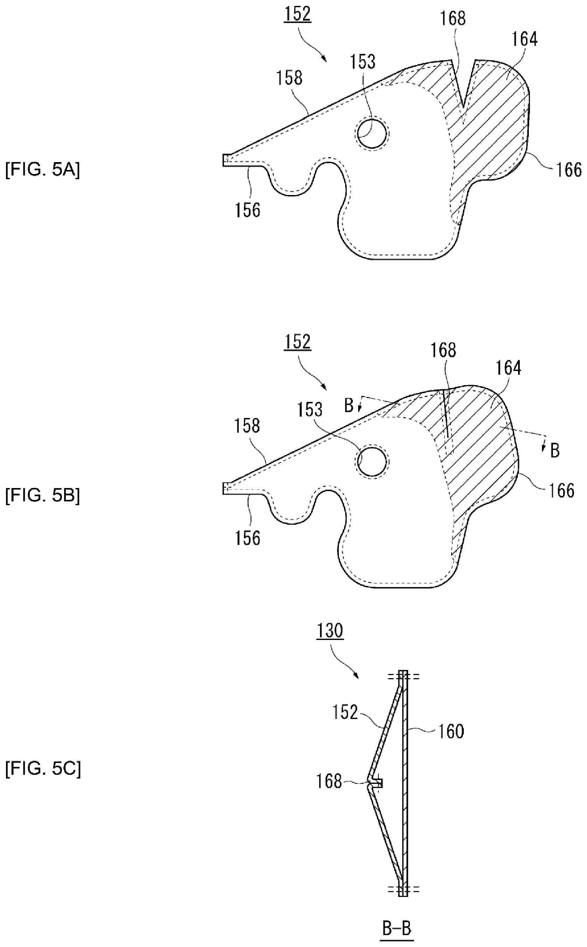

FIG. 5 is a view depicting the process of forming the rearward protruding part 130 (see FIG. 3(b)) from the side panel 152 in FIG. 4(b).

FIG. 5(a) is a diagram depicting the side panel 152 in FIG. 4(b). Of the side panel 152, a hatched region is an outer lobe panel portion 164 forming an outer side, in the vehicle-width direction, of the rearward protruding part 130 (see FIG. 3(b)). The outer lobe panel portion 164 has an outer peripheral part 166 joined to the outer peripheral part 160a of the inner lobe panel 160 depicted in FIG. 4(d), and together with the inner lobe panel 160, forms the rearward protruding part 130.

The outer lobe panel portion 164 has a larger area than the inner lobe panel 160 (see FIG. 4(d)) when spread out and placed flat. Furthermore, the outer lobe panel portion 164 is provided with a notch part 168 that is cut out toward the center.

FIG. 5(b) is a view of the side panel 152 in FIG. 5(a) with the notch part 168 in a closed state. The outer peripheral part 166 of the outer lobe panel portion 164 is joined in a state in which edges of the notch part 168 are connected and closed by sewing or the like, whereby the outer peripheral part has approximately the same shape and length as the outer peripheral part 160a of the inner lobe panel 160 (see FIG. 4(d)). In this state, the outer peripheral part 166 of the outer lobe panel portion 164 and the outer peripheral part 160a of the inner lobe panel 160 are joined together, forming a rearward protruding part 130 (see FIG. 3(a)).

FIG. 5(c) is a cross-sectional view of the rearward protruding part 130 corresponding to the B-B section of the side panel 152 in FIG. 5(b). As described above, the outer lobe panel portion 164 has a larger area than the inner lobe panel 160. Furthermore, when the notch part 168 is in a closed state, the outer lobe panel portion 164 takes on a three-dimensional shape. Thus, because the outer lobe panel portion 164 has a larger area and a more three-dimensional shape than the inner lobe panel 160, the rearward protruding part 130 can be caused to have a larger capacity.

FIG. 6 is a view depicting the process of the airbag cushion 108 of FIG. 3(b) restraining the occupant 112. FIG. 6(a) is a view depicting the appearance of the airbag cushion 108 immediately after expansion and deployment.

The airbag cushion 108 expands and deploys at a front part of the vehicle where the occupant 112 is seated in the seat 104 (see FIG. 1(b)). At this time, the airbag cushion 108 not only expands the front protection part 128 of the main expansion part 120 toward the front of the occupant 112, but also expands the rearward protruding parts 130 and 132 so that they protrude rearward from both sides of the front protection part 128 in the vehicle width direction.

FIG. 6(b) is a view of the occupant 112 from FIG. 6(a) in a state of having entered the airbag cushion 108. In an oblique collision, which is a collision from the front at an angle, the occupant 112 may also move forward at an angle. At this time, the rearward protruding parts 130 and 132 function effectively to protect the occupant 112.

As depicted in FIG. 6(b), for example, when an occupant 112 moves diagonally to the left and forward, the airbag cushion 108 restrains the head part 172 of the occupant 112 from the front of the vehicle with the front protection part 128, while also restraining a side head part 174 of the head part 172 of the occupant 112 with the rearward protruding part 130.

In oblique collisions, if the head part 172 of an occupant 112 entering diagonally forward makes contact only with the front protection part 128, a clockwise rotational force (rotation 176 depicted by the arrow) may be generated in the head part 172 when viewed from above, with the neck as the axis. Such manner of rotation 176 of the head part 172 have been found to readily increase the injury level of the occupant 112.

In the present embodiment, the front protection part 128 and the rearward protruding part 130 actively restrain the area from the front side of the head part 172 to the side head part 174, thereby reducing, canceling, or absorbing the rotation 176 that occurs in the head part 172. This configuration reduces the angular velocity of the rotation 176 of the head part 172 of the occupant 112, thereby suppressing the injury value to the head part 172 associated with the rotation 176.

As explained with reference to FIG. 5(c), the rearward protruding part 130 has a configuration in which the area of the inner lobe panel 160 is smaller than that of the outer lobe panel portion 164. Therefore, the inner lobe panel 160 tends to experience greater tension than the outer lobe panel portion 164. The same applies to the rearward protruding part 132, which consists of the outer lobe panel portion 165 and the inner lobe panel 162.

With the above configuration, the rearward protruding parts 130 and 132 in FIG. 6(b) are readily pulled inward by the inner lobe panels 160 and 162, respectively, generating inward forces 180 and 182, enabling restraint of the head part 172 of the occupant 112 by enveloping the head part from both sides. In addition to this effect, the three-dimensional outer lobe panel portion 164 (see FIG. 5(c)) ensures a larger volume for the rearward protruding parts 130 and 132, allowing the rearward protruding parts 130 and 132 to exert a high occupant restraint force on the head part 172 of the occupant 112.

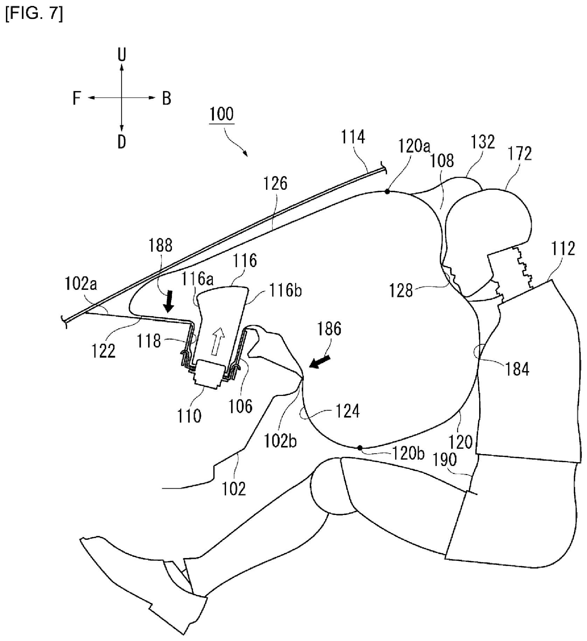

FIG. 7 is a view depicting how the airbag cushion 108 in FIG. 2 restrains an occupant 112. When an occupant 112 enters the front protection part 128, the airbag cushion 108 may generate a force 186 in which the rear contact part 124 of the main expansion part 120 pushes the rear surface 102b of the instrument panel 102 forward, and a force 188 in which the front contact part 122 pushes the upper surface 102a of the instrument panel 102 downward.

More specifically, when the occupant 112 leans forward, a downward rotational force 186 is generated in the main expansion part 120 around the inflator connection part 118, causing the rear contact part 124 to interfere with the rear surface 102b of the instrument panel 102. In addition, when a force is generated from the occupant 112 in a direction that lifts the main expansion part 120, a rotational force 188 is generated at the front contact part 122, causing downward rotation around the inflator connection part 118. This causes the front contact part 122 to interfere with the upper surface 102a of the instrument panel 102.

As a result of the action described above, the airbag cushion 108 contacts the upper surface 102a and rear surface 102b of the instrument panel 102, and by utilizing these upper surface 102a and rear surface 102b as reaction surfaces, the occupant 112 can be restrained in a stable position. Thus, when an occupant is restrained, the airbag cushion 108 can maintain a self-supporting orientation by making full use of the instrument panel 102, without using the windshield 114 as a reaction surface.

As described above, in the present embodiment, the airbag cushion 108 expands and deploys with the cushion upper surface part 126 separated from the windshield 114, and the front contact part 122 contacts the upper surface 102a of the instrument panel 102, and the main expansion part 120 contacts the rear surface 102b of the instrument panel 102 via the rear contact part 124, thereby enabling the main expansion part to maintain a self-supporting orientation. With this configuration, the airbag cushion 108 can stabilize the position without coming into contact with the windshield 114, and effectively restrain the occupant 112. Therefore, with the vehicle airbag device 100 of the present embodiment, both a reduction in the burden on the windshield 114 and an improvement in occupant restraint force can be achieved.

The airbag cushion 108 rapidly expands and deploys the front contact part 122 and the main expansion part 120 by guiding gas to the front contact part 122 and the main expansion part 120 via the diffuser 116. This also enables bringing the airbag cushion 108 into contact with the instrument panel 102, thereby stabilizing the orientation of the airbag cushion 108 at an earlier stage.

Furthermore, as explained with reference to FIG. 6(b), the airbag cushion 108 utilizes the difference in area between the outer lobe panel portions 164 and 165 and the inner lobe panels 160 and 162 to generate inward forces 180 and 182 on the rearward protruding parts 130 and 132. Compared to conventional methods of forming protruding parts on the airbag cushion 108 using tension from internal tethers, the structure of this airbag cushion 108 is simpler, reducing the amount of materials and sewing required, and thus suppressing costs. In addition, by omitting internal tethers and the like, gas can flow smoothly inside the airbag cushion 108, ensuring rapid expansion and deployment.

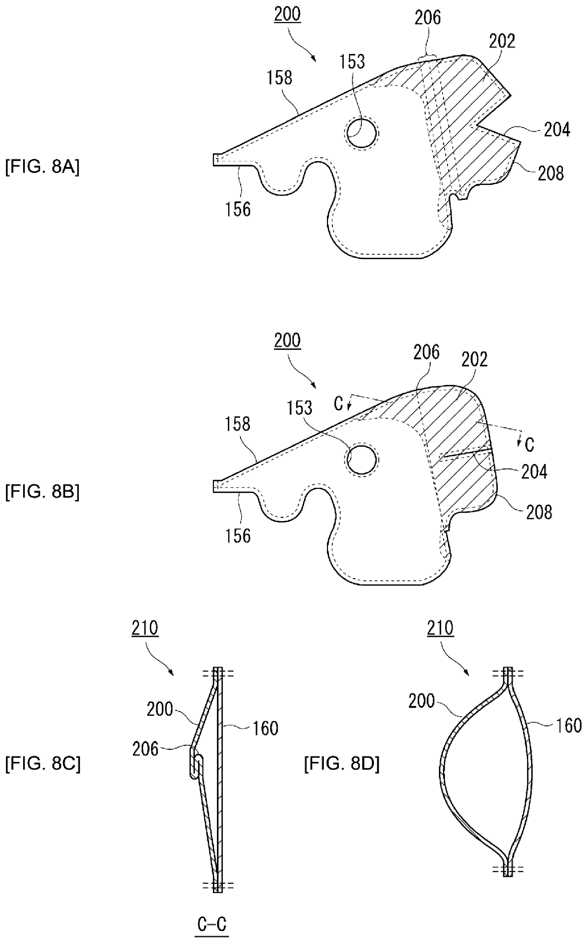

FIG. 8 is a view depicting a modified example (side panel 200) of the side panel 152 of FIG. 5. In the description below, the same code will be provided for configuration elements that have already been described and the description thereof is omitted. In addition, configuration elements with the same name as configuration elements already described have the same configuration and function even if a different reference is applied.

FIG. 8(a) is an example depicting the side panel 200 in an unfolded state on a flat surface. The side panel 200 has a folded-back region 206 in an outer lobe panel portion 202. The folded-back region 206 is the region that is folded when joined to the inner lobe panel 160. The side panel 200 has a larger area for the outer lobe panel portion 202, and is designed to be joined to the inner lobe panel 160 (see FIG. 4(d)) when the folded-back region 206 is in a folded state.

FIG. 8(b) is a view of a state with the side panel 200 in FIG. 8(a) and a notch part 204 joined. An outer peripheral part 208 of the outer lobe panel portion 202 is folded over at the folded-back region 206 and then the edges of the notch part 204 are closed by sewing or other means, resulting in a shape and length that is approximately the same as the outer peripheral part 160a of the inner lobe panel 160 (see FIG. 4(d)). In this state, the outer peripheral part 208 of the outer lobe panel portion 202 and the outer peripheral part 160a of the inner lobe panel 160 are joined together, forming a rearward protruding part 210 (see FIG. 8(c)).

FIG. 8(c) is a cross-sectional view of the rearward protruding part 210 corresponding to the C-C section of the side panel 200 in FIG. 8(b). As described above, the outer lobe panel portion 202 has a larger area than the inner lobe panel 160 (see FIG. 4(d)). Furthermore, when the notch part 204 is in a closed state, the outer lobe panel portion 202 takes on a three-dimensional shape.

FIG. 8(d) depicts the rearward protruding part 210 in FIG. 8(c) in an expanded state. The rearward protruding part 210 is configured such that, when gas flows thereinto, folding of the folded-back region 206 is released, thereby enabling the outer lobe panel portion 202 to expand to a greater extent. Thus, by using the outer lobe panel portion 202 as the rearward protruding part 210, a larger capacity can be ensured to further enhance the occupant restraint force.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts depicted in detail in the attached drawings. In addition, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used in a vehicle airbag device that includes an airbag cushion that expands and deploys between the vehicle's instrument panel and an occupant seated in the front row.

### DESCRIPTION OF CODES

100. Vehicle airbag device, 102. Instrument panel, 102a. Upper surface, 102b. Rear surface, 104. Seat, 106. Stowing part, 108. Airbag cushion, 110. Inflator, 112. Occupant, 114. Windshield, 116. Diffuser, 116a. Front opening part, 116b. Rear opening part, 118. Inflator connection part, 120. Main expansion part, 120a. Upper end, 120b. Lower end, 121a. Upper expansion part, 121b. Lower expansion part, 122. Front contact part, 124. Rear contact part, 126. Cushion upper surface part, 128. Front protection part, 130, 132. Rearward protruding part, 134. Main panel, 136, 138. Side edge, 140, 142. End part, 144, 146. Curved part, 148. Opening, 150. Bolt hole, 152. Side panel, 153. Vent hole, 154. Side panel, 155. Vent hole, 156. Lower edge, 158. Upper edge, 160. Inner lobe panel, 160a. Outer peripheral part, 160b. Inner peripheral part, 162. Inner lobe panel, 164. Outer lobe panel portion, 165. Outer lobe panel portion, 166. Outer peripheral part, 168. Notch part, 170. Notch part, 172. Head part, 174. Side head part, 176. Rotation, 180, 182. Force, 184. Chest part, 186. Force, 188. Force, 190. Abdomen, L1. Virtual line, 200. Side panel, 202. Outer lobe panel portion, 204. Notch part, 206. Folded-back region, 208. Outer peripheral part, 210. Rearward protruding part.

## Claims

1. A vehicle airbag device comprising:
an airbag cushion that expands and deploys between an instrument panel of a vehicle and an occupant seated in a regular orientation in a front-row seat; and
an inflator secured to an inner side of an upper surface of the instrument panel that supplies gas to the airbag cushion, wherein
the airbag cushion includes:
an inflator connection part into which a part of the inflator is inserted;
a main expansion part formed vehicle-rearward of the inflator connection part and expanding to a position lower than the upper surface of the instrument panel;
a front contact part that expands from the inflator connection part protruding in a wedge shape in a forward direction of the vehicle along the upper surface of the instrument panel;
a cushion upper surface part formed from the front contact part over an upper side of the main expansion part;
a front protection part formed in a region of the main expansion part facing the occupant that restrains the occupant from a front side of the vehicle; and
a pair of rearward protruding parts provided on both sides of the front protection part in the vehicle width direction and expanding in a state of protruding vehicle-rearward,
the airbag cushion being capable of retaining a self-supporting orientation based on the front contact part contacting the upper surface of the instrument panel and the main expansion part contacting a vertically extending portion of a rear surface of the instrument panel.

2. The vehicle airbag device according to claim 1, wherein
the main expansion part has a lower expansion part that expands and deploys below a virtual line extending along the upper surface of the instrument panel, and
the lower expansion part has a rear contact part formed at a lower part of the lower expansion part, that bulges forward relative to an upper part of the lower expansion part, and contacts the rear surface of the instrument panel.

3. The vehicle airbag device according to claim 1 or 2, wherein
the airbag cushion further includes a diffuser provided inside the airbag cushion around the inflator connection part and covering a part of the inflator, and
the diffuser includes:
a front opening part that guides gas supplied from the inflator to the front contact part on a vehicle-front side; and
a rear opening part that guides gas supplied from the inflator to the main expansion part on a vehicle-rear side.

4. The vehicle airbag device according to claim 1 or 2, wherein
the airbag cushion includes:
a main panel that forms the cushion upper surface part, the front protection part, and a lower surface of the airbag cushion extending from the main expansion part to the front contact part, and in which the inflator connection part is provided;
a pair of side panels forming vehicle-width-direction outer sides of the main expansion part, the front contact part, and the rearward protruding parts, respectively; and
a pair of inner lobe panels forming vehicle-width direction inner sides of the rearward protruding parts,
of the side panels, an outer lobe panel portion forming the vehicle-width direction outer side of the rearward protruding part has a larger surface area than the inner lobe panel in a state spread out and placed flat, and
the outer lobe panel portion is formed into a three-dimensional shape by being joined in a state in which a prescribed notch part cut inward toward a center is closed.

5. The vehicle airbag device according to claim 1 or 2, wherein
the cushion upper surface part is formed by expanding and deploying the upper surface of the airbag cushion in a state separated from a windshield of the vehicle.
